# EUROPEAN PATENT APPLICATION

(11) **EP 2 056 603 A2**
(43) Date of publication of application: **06.05.2009**
(21) Application number: 08168415.1
(22) Date of filing: 05.11.2008
(51) Int. Cl.: H04N 7/16

(54) **Systems and methods to play out advertisements**

(30) Priority: 05.11.2007 US 982826
(71) Applicant: OpenTV, Inc., San Francisco, CA 94111-3810 (US)
(72) Inventor: Tinsman, John, 1807 Blonay (CH)
(74) Representative: Freeman, Jacqueline Carol

(57) **Abstract**

Systems and methods to play out advertisements are described. A system includes a request module to receive a request to render primary content to an output device at a receiving device at an accelerated speed of the primary content. The system also includes a communication module to select secondary content from a plurality of secondary content based on secondary metadata associated with the secondary content and primary metadata. The system also includes a render module to render the secondary content instead of the primary content to the output device at the receiving device. The render module renders the secondary content at a normal speed of the secondary content responsive to receipt of the request.

## Description

### FIELD

Embodiments relate generally to the technical field of communications.

### BACKGROUND

Many receiving devices such as personal video recorders (PVRs) or digital video recorders (DVRs) may provide support for trick mode requests that enable a user to fast-forward or rewind content (e.g. primary content). For example, a user who has recorded a movie on a PVR may fast-forward through a scene while playing the movie. In response to the request, the PVR may render the movie to a display device at an accelerated speed. Two disadvantages may be identified in processing the user's request to fast-forward. First, the content played out in response to the fast-forward request is the *same* content, nevertheless played at an accelerated speed. Second, the content played out may include paid for advertisements such as product placements that the viewer cannot view because play out is accelerated and difficult to view.

### BRIEF DESCRIPTION OF DRAWINGS

Embodiments are illustrated by way of example and not limitation in the figures of the accompanying drawings, in which like references indicate similar elements and in which:

**Figure 1** is a block diagram illustrating a system, according to an example embodiment, to play out advertisements;

**Figure 2A** is a block diagram illustrating a database, according to an example embodiment;

**Figure 2B** is a block diagram illustrating an entertainment asset, according to an example embodiment;

**Figure 2C** is a block diagram illustrating an advertisement asset, according to an example embodiment;

**Figure 2D** is a block diagram illustrating a secondary asset, according to an example embodiment;

**Figure 3** is a block diagram illustrating example embodiments of secondary content, according to an example embodiment, for entertainment;

**Figure 4** is a block diagram illustrating frames and packets, according to an example embodiment;

**Figure 5** is a flowchart illustrating a method, according to an example embodiment, to play out advertisements;

**Figure 6** is a flowchart illustrating a method, according to an example embodiment, to select secondary content;

**Figure 7** is a flowchart illustrating a method, according to an example embodiment;

**Figure 8** is a block diagram illustrating a system, according to an example embodiment, to play out advertisements;

**Figure 9** is a block diagram illustrating a database, according to an example embodiment, to store entertainment assets and secondary information;

**Figure 10** is a block diagram illustrating a database, according to an example embodiment, to store advertisement assets and secondary information;

**Figure 11** is a block diagram illustrating a receiving device, according to an example embodiment;

**Figure 12A** is a block diagram illustrating a component transmission, according to an example embodiment;

**Figure 12B** is a block diagram illustrating a component transmission, according to an example embodiment;

**Figure 12C** is a block diagram illustrating a component transmission, according to an example embodiment;

**Figure 12D** is a block diagram illustrating a transmission, according to an example embodiment;

**Figure 13** is a block diagram illustrating streams associated with a channel, according to an example embodiment;

**Figure 14** is a block diagram illustrating a packet, according to an example embodiment;

**Figure 15A** is a block diagram illustrating primary content and primary metadata, according to an example embodiment;

**Figure 15B** is a block diagram illustrating secondary content and secondary metadata, according to an example embodiment;

**Figure 16** is a block diagram illustrating channels, according to an example embodiment;

**Figure 17** is a block diagram illustrating end of primary content markers, according to an example embodiment;

**Figure 18** is flowchart illustrating a method, according to an example embodiment, to play out an advertisement;

**Figure 19** is a diagram illustrating a user interface, according to an example embodiment; and

**Figure 20** is a block diagram of a machine, according to an example embodiment, including instructions to perform any one or more of the methodologies described herein.

### DETAILED DESCRIPTION

In the following description, for purposes of explanation, numerous specific details are set forth to provide a thorough understanding of example embodiments of the present invention. It will be evident, however, to one skilled in the art that the present invention may be practiced without these specific details.

### Overview

Described below are systems and methods to play out advertisements. Specifically, example embodiments are described that respectively process a trick-mode request (e.g., fast-forward, fast reverse, etc.) during play out of primary content such as a movie, advertisement, or sporting event. In response to receiving the trick mode request, secondary content, in the form of an advertisement, may be played out at a normal speed rather than an accelerated speed. Further, the advertisement may be selected based on metadata associated with the primary content and metadata associated with the secondary content.

### Definitions

*Primary Content* in this document is intended to include content that may be played on a receiving device or interacted with on a receiving device. Primary content may include but is not limited to entertainment content and advertisement content. Further, primary content may include video content and/or audio content.

*Secondary Content* in this document is intended to include content that may be substituted for primary content responsive to receipt of a trick mode request (e.g., fast-forward, rewind, reverse, etc.). The secondary content may be played or interacted with on a receiving device. Further, secondary content may include video content and/or audio content and/or information to generate secondary content and/or information to access secondary content.

*Normal Speed* in this document is intended to include an instantaneous speed to render a discrete unit of content (e.g., primary content or secondary content) to an output device, the normal speed being the speed to render the discrete unit of content from beginning to end in a predetermined play time that is associated with the content. For example, an episode of *Gilligan's Island* may be rendered at a receiving device at a normal speed such that the episode completes in a predetermined running time (e.g., play time) of twenty-five minutes. Play times may be published with the primary and secondary content. For example, movies may be stored on media and labeled with the play time of the movie. A normal speed may be applicable to advancing the discrete unit of content in forward or reverse directions.

*Accelerated Speed* in this document is intended to include an instantaneous speed to render a discrete unit of content to an output device, the accelerated speed being any speed greater than the normal speed associated with the discrete unit of content. An accelerated speed may be applicable to advancing the discrete unit of content in forward or reverse directions.

### Point to Point Communications

This present disclosure describes embodiments that use point-to-point communications. For example, point-to-point communications may be embodied as a video-on-demand server that communicates with a receiving device (e.g., settop box).

### Point to Multi-Point Communications

This present disclosure further describes embodiments that use point-to-multi-point communications. For example, point-to-multi-point communications may be embodied as an broadcast/multicast system that transmits a transmission to multiple receiving devices (e.g., settop box).

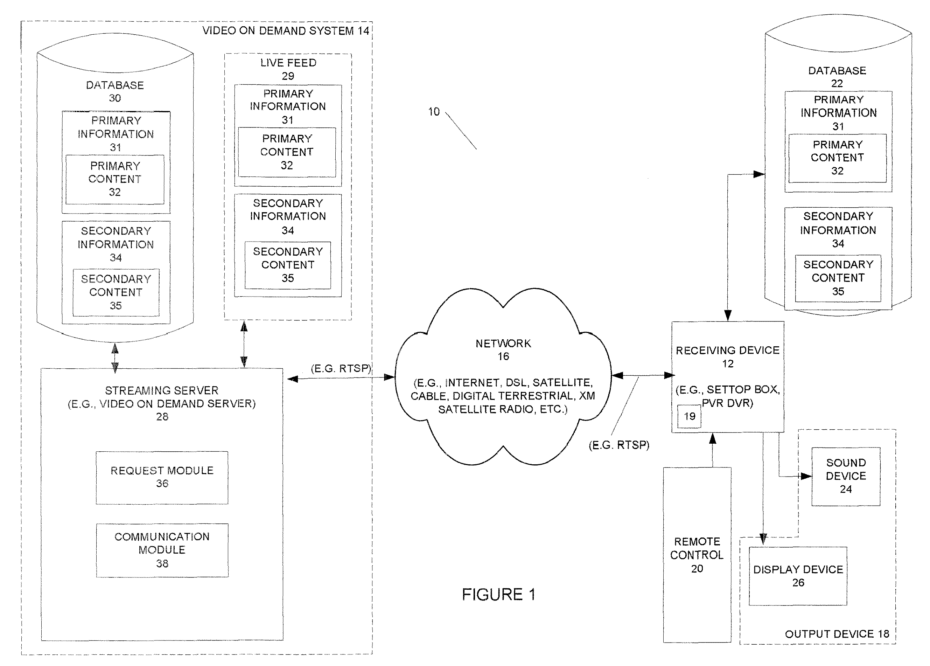

**Figure 1** is a block diagram illustrating a system 10, according to an example embodiment. The system 10 is shown to include a receiving device 12, a video-on-demand system 14, and a network 16. The receiving device 12 may, for example, include a settop box (STB), a personal computer, an iPod, a personal video recorder (PVR) (e.g., analog or digital input), a personal digital recorder (PDR) (e.g., analog or digital input), a mobile phone, a portable media player, a game console, or any other device capable of playing video and/or audio content. The receiving device 12 is shown to be coupled to an output device 18 and a database 22. In an example embodiment, the receiving device 12 may be operated or controlled with control buttons 19 or a remote control 20. The output device 18 may include a sound device 24 and a display device 26, however, it will be appreciated by those skilled in the art that the output device 18 may also include a machine device to communicate machine interface information (e.g., SGML) to a machine (e.g., client, server, peer-to-peer). The network 16 may be any network capable of communicating video and/or audio and may include the Internet, closed IP networks such as DSL or FTTH, digital broadcast satellite, cable, digital, terrestrial, analog and digital (satellite) radio, etc. and/or hybrid solutions combining one or more networking technologies. The database 22 may be a source of prerecorded primary information 31 and secondary information 34. The primary information 31 may include primary content 32 and/or primary metadata 33. The secondary information 34 may include secondary content 35 and/or secondary metadata 41. The primary content 32 may be played on the output device 18 at the receiving device 12. The secondary content 35 may also be played on the output device 18 at the receiving device 12.

The video-on-demand system 14 is shown to include a streaming server 28, a live feed 29, and a database 30. The database 30 and live feed 29 may be a source of prerecorded primary information 31 and/or secondary information 34. The primary information 31 may include including primary content 32 and/or primary metadata. The secondary information 31 may include secondary content 35 and/or secondary metadata 41. The primary content 32 may be played on the output device 18 at the receiving device 12. The secondary content 35 may also be played on the output device 18 at the receiving device 12.

The streaming server 28 includes a request module 36 and a communication module 38. The request module 36 may receive and process requests. For example, the request module 36 may receive a request to play primary content 32, a request to fast-forward primary content 32, a request to rewind primary content 32, a request to pause primary content 32, and other requests. In one example embodiment, the streaming server 28 and the receiving device 12 may use the real time streaming protocol (RTSP) to communicate. In another example embodiment the streaming server 28 and the receiving device 12 may use the digital storage media command and control protocol (DSM-CC) to communicate. In another embodiment, the request module 36 may execute on the receiving device 12.

The communication module 38 may respond to requests received by the request module 36. For example, the communication module 38 may respond by communicating primary content 32, selecting secondary information 34, or communicating the secondary information 34. In another embodiment, the request module 36 and the communication module 38 may execute on the receiving device 12. In another embodiment, the request module 36 may execute on the streaming server 28 and the communication module 38 may execute on the receiving device 12.

While the system 10 shown in **Figure 1** employs a client-server architecture, the present disclosure is of course not limited to such an architecture and could equally well find application in a distributed, or peer-to-peer, architecture system. The request module 36 and communication module 38 may also be implemented as standalone software programs, which do not necessarily have networking capabilities.

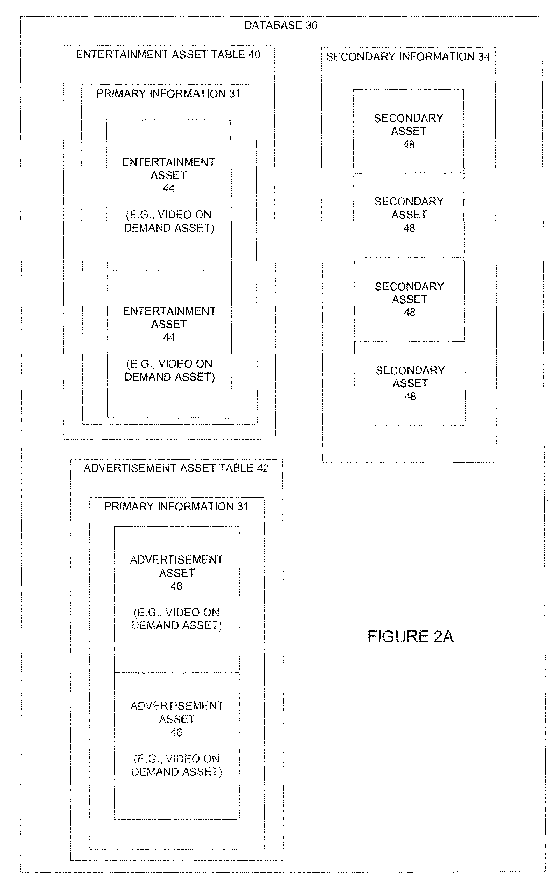

**Figure 2A** is a block diagram illustrating a database 30, according to an example embodiment. The database 30 is shown to include an entertainment asset table 40, an advertisement asset table 42, and secondary information 34. The entertainment asset table 40 includes entertainment assets 44 (e.g., video-on-demand assets). The entertainment asset 44 may be embodied as an audio/video asset such as a movie, television program such as a documentary, a biography, a cartoon, a program, music or music video, or an audio asset such as music track, audio interview or news program or any other form of entertainment that may be requested from the receiving device 12. A particular entertainment asset 44 may be accessed in the entertainment asset table 40 with an entertainment asset identifier.

The advertisement asset table 42 includes advertisement assets 46 (e.g., video-on-demand assets). For example, the advertisement asset 46 may be embodied as a commercial, a public service announcement, an infomercial or any other form of advertisement. A particular advertisement asset 46 may be accessed in the advertisement asset table 42 with an advertisement asset identifier.

The secondary information 34 includes secondary assets 48 (e.g., video-on-demand assets). For example, the secondary assets 48 may be embodied as a commercial, a public service announcement, an infomercial or any other form of advertisement. The secondary assets 48 may be accessed in response to a trick-mode request.

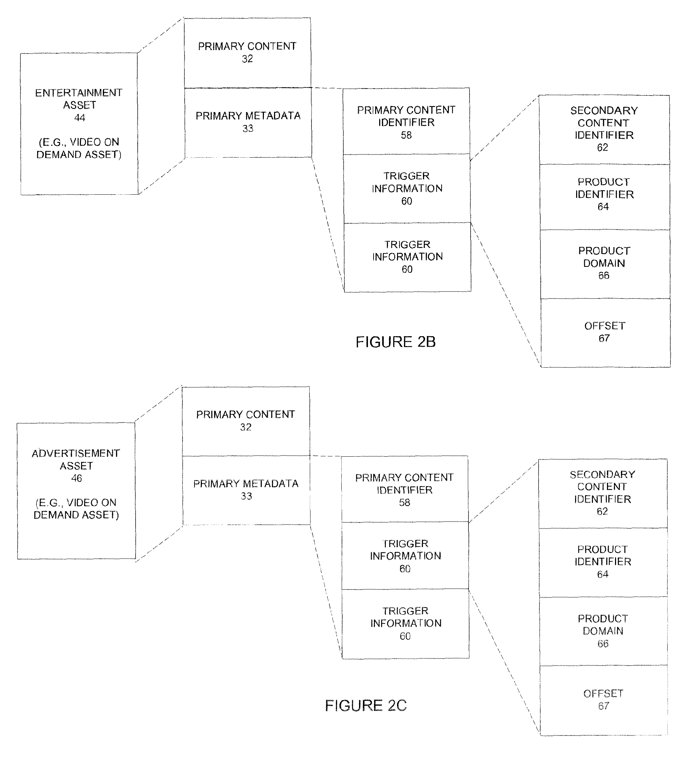

**Figure 2B** is a block diagram illustrating an entertainment asset 44, according to an example embodiment. The entertainment asset 44 includes primary content 32 and primary metadata 33. The primary content 32 has been described. The primary metadata 33 includes a primary content identifier 58 and one or more entries of trigger information 60. The primary content identifier 58 may be used to identify the primary content 32. The trigger information 60 may be used to select secondary content 35 for play out in response to a trick-mode request. Different trigger information 60 may be synchronized to different segments of the primary content 32. Accordingly, in one embodiment, a different trigger information entry 60 may correspond to each five minute segment of the primary content 32. The trigger information 60 includes a secondary content identifier 62, a product identifier 64, a product domain 66, and an offset 67. The secondary content identifier 64 may be used to identify secondary content 35 for play out in response to receiving a trick mode request. The product identifier 64 may be used to identify one or more products that are presented via the primary content 32. Accordingly, a movie that includes a placement advertisement featuring Coke (e.g., Russell Crow drinking a Coke while defeating a Roman gladiator in the movie *Gladiator*) may include a product identifier for Coke that is synchronized to play out of the placement advertisement. In one embodiment, the product identifier 64 may be used to identify any one of multiple types and/or uses of a product (e.g., Coke in cans, Coke in bottles, Coke at a sporting event, Coke in an alcoholic beverage, etc.). The product domain 66 may be used to identify one or more domains of a products that is presented via the primary content 32. For example, a product domain 66 for Coke may include the product domain 66 beverage, the product domain 66 soft drink, the product domain 66 cola, or any other appropriate classification of Coke. The product domain 66 of the primary content may be used to select secondary content 35. For example, the system may determine that a movie segment includes a placement advertisement for a product in the product domain 66 of beverages. Accordingly, the system may select secondary content 35 in a different product domain 66 (e.g,. sporting goods) to avoid presentation of a competitive product. The offset 67 may be used to identify the appropriate trigger information 60 in an entertainment asset. For example, an entertainment asset 44 may be associated with four trigger information entries 60 respectively associated with offsets of 0-24%, 25-49%, 50-74%, and 75-100%. Accordingly, receipt of a trick mode request concurrent with play out of the initial frames of an entertainment asset 44 may be associated with the trigger information entry 60 associated with the offset of 0-24%.

**Figure 2C** is a block diagram illustrating an advertisement asset 46, according to an example embodiment. The advertisement asset 46 includes primary content 32 and primary metadata 33 as previously described.

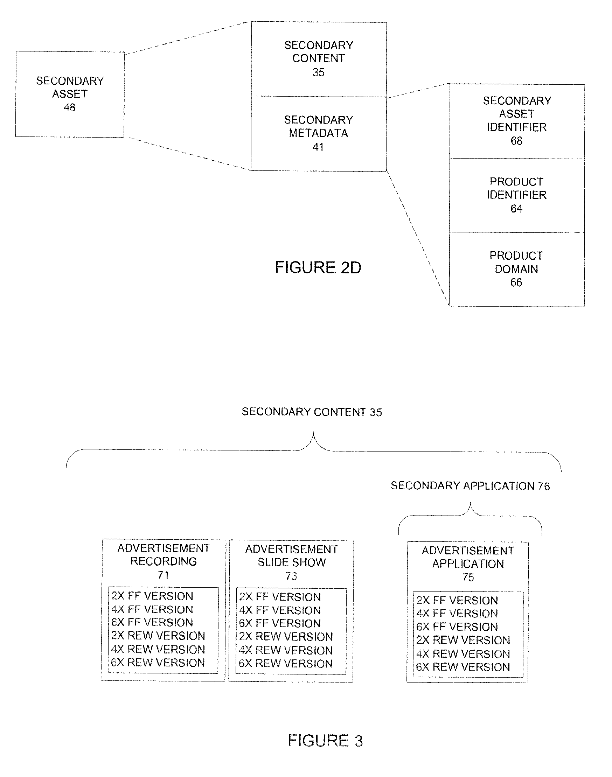

**Figure 2D** is a block diagram illustrating a secondary asset 48, according to an example embodiment. The secondary asset 48 includes secondary content 35 and secondary metadata 41. The secondary content 35 has been described. The secondary metadata 41 includes a secondary asset identifier 68, a product identifier 64, and a product domain 66. The product identifier 64 identifies a product presented via the secondary content 35. The product domain 66 identifies one or more domains of the product presented via the secondary asset 48.

**Figure 3** is a block diagram illustrating example embodiments of secondary content 35. The secondary content may include an advertisement recording 71, an advertisement slide show 73, and a secondary application 76 in the form of an advertisement application 75. The advertisement recording 71 and the advertisement slide show 73 may be immediately rendered by the receiving device 12 to the output device 18. The advertisement application 75 may be an application that may be executed by the communication module 38 to generate secondary content 56. For example, the secondary application 76 may include an advertisement application 75 that may be executed by the communication module 38 to generate an advertisement recording 71 or an advertisement slide show 73.

The advertisement slide show 73 may include one or more still images and/or sounds to be rendered to the output device 18 at the receiving device 12. The still images may have video effects applied to them, including but not limited to fade-ins and fade-outs dissolves, splits, wipes, etc.

The secondary content 35 may be prerecorded and stored on the database 30 or provided live (e.g., sporting events, election results, etc.) as communicated to the streaming server 28 from the live feed 29.

The secondary content 35 are respectively shown to include six versions that correspond to different types of trick mode requests to fast-forward or reverse (e.g., rewind) primary content 32. Further a trick mode request may specify various accelerated speeds to fast-forward or rewind the primary content 32. For example, the request to fast-forward or rewind may be two-times (e.g., 2X), four-times (e.g., 4X) and six-times (e.g., 6X) of the normal speed at which the primary content 32 is rendered to the output device 18. Other example embodiments may include additional or fewer versions. The various versions may correspond to secondary content 35 that has play times of different duration. For example, secondary content 35 corresponding to two-times (e.g., 2X), a four-times (e.g., 4X), and six-times (e.g., 6X) may have play times of 10, 5, and 2 seconds, respectively. Further, it will be appreciated by a person having ordinary skill in the art that the above described secondary content 35 may be designed to be played at normal speed or at any speed within a range of speeds around the normal speed (e.g., accelerated speeds) to achieve a high quality play out.

In some embodiments, the secondary content 35 may include or be generated to include (e.g., via a secondary application 76) an interactive application that may result in a presentation to an end user that enables interaction with the user. For example, secondary content 35 may include an interactive application that may cause a pop-up that enables an end user to cast a vote regarding a preference of one product over another.

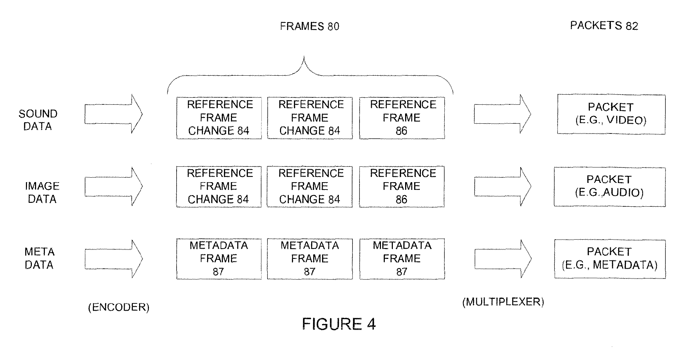

**Figure 4** is a block diagram illustrating frames 80 and packets 82 according to an example embodiment. In an example embodiment the primary information 31 and the secondary information 34 may be stored as frames 80 on the database 30. In another example embodiment, the primary information 31 and the secondary information 34 may be stored as packets 82 on the database 30.

Moving from left to right, analog image data and analog sound data may be encoded by an encoder to produce the frames 80. The frames 80 include reference frames 86, reference frame changes 84, and a metadata frames 87. The reference frame 86 may contain reference frame data that is sufficient to completely render an image on the display device 26. In contrast, the reference frame change 84 may contain reference frame change data representing the differences between two successive frames 80. The reference frame change 84 thereby enables bandwidth savings proportional to the similarity between the successive frames 80 (e.g., redundant information is not communicated). The metadata frame 87 contains metadata frame data that may be used to synchronize the corresponding image and sound data.

The reference frames 86, reference frame changes 84, and metadata frames 87 may further be packetized by a multiplexer into packets 82. The packets 82 are shown to include video information, audio information, and metadata.

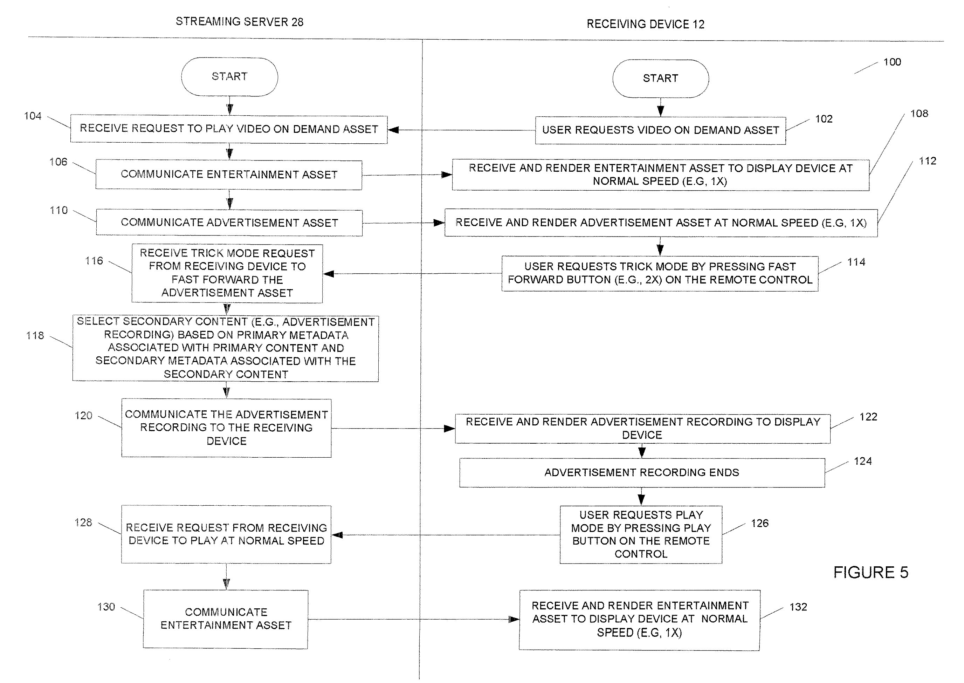

**Figure 5** is a flowchart illustrating a method 100, according to an example embodiment. Illustrated on the right are operations performed on the receiving device 12 and illustrated on the left are operations performed on the streaming server 28. The method 100 commences at the receiving device 12, at operation 102, with the user requesting an entertainment asset 44. For example, the user may use a remote control 20 to select a video-on-demand asset from a menu that is displayed on the display device 26. In response to the user's request, the receiving device 12 may communicate the request over the network 16 to the streaming server 28. In an example embodiment, the receiving device 12 and the streaming server may use the real time streaming protocol (RTSP).

At operation 104, at the streaming server 28, the request module 36 receives the request to play the video-on-demand asset. For example, the request may include a primary content identifier that may be used to access the appropriate entry in the entertainment asset table 40. At operation 106, the communication module 38 communicates (e.g., streams, play out) the entertainment asset 44 over the network 16 to the receiving device 12.

At operation 108 the receiving device 12 receives and renders the entertainment asset 44 to the display device 26 at the normal speed for the entertainment asset 44 until a scheduled advertisement.

At operation 110, at the streaming server 28, the communication module 38 communicates primary content 32 embodied as an advertisement asset 46.

At operation 112, the receiving device 12 receives and renders the advertisement asset 46 at normal speed on the display device 26 and the sound device 24. At operation 114, the user may decide not to watch the advertisement and select the fast-forward button on the remote control 20 to accelerate the forward speed of the advertisement. Responsive to the request, the receiving device 12 may communicate the fast-forward trick mode request to the streaming server 28. For example, the user may request fast-forwarding at twice the normal speed (e.g., 2X FF) of the advertisement asset 46 by pressing a fast-forward button on the remote control 20 once.

At operation 116, at the streaming server 28, the request module 36 receives the trick mode request from the receiving device 12. For example, the trick mode request may include a primary content identifier, a direction identifier (e.g., forward or reverse) and a speed identifier (e.g., 2X, 4X, 6X, etc.).

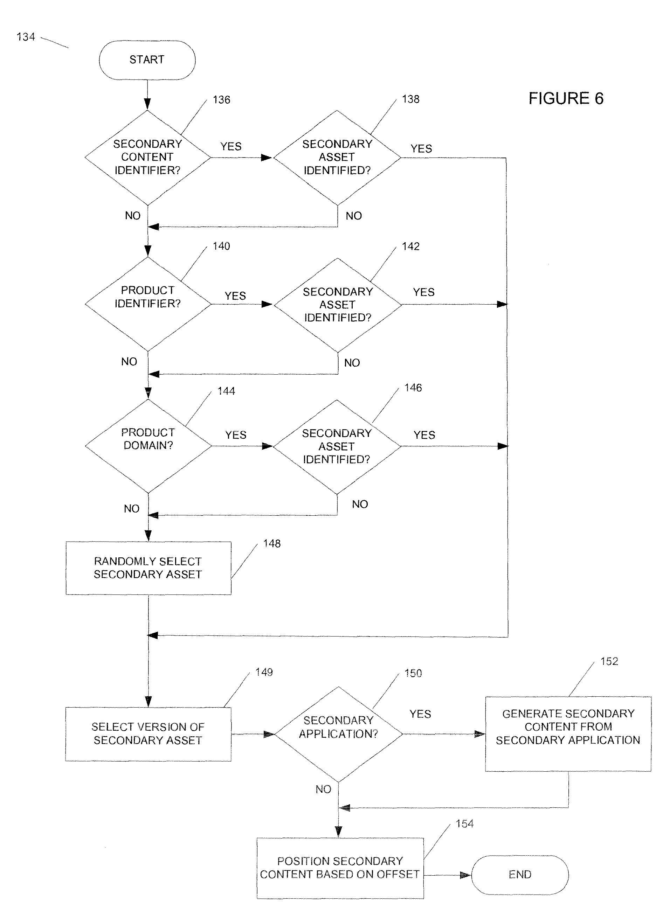

At operation 118, the communication module 38 selects secondary content 35 based on the primary metadata 33 associated with the primary content 32 and secondary metadata 41 associated with secondary content 35. For example, the communication module 38 may identify trigger information 60 associated with the primary content 32 according to an offset 67 that corresponds to the segment of primary content 32 that is being played out at the moment of receipt of the trick mode request. Next, the communication module 38 may use the trigger information 60 to search the secondary metadata 41 of the secondary assets 50 to select a specific secondary asset 50 (e.g., secondary content 35) . In addition, the communication module 38 may initiate fast-forwarding of the advertisement asset 46 at twice the normal speed without streaming the advertisement asset 46 to the receiving device 12. Further details of the processing for the operation 118 is described in **Figure 6****.**

At operation 120, the communication module 38 may communicate (e.g., play out, stream, etc.) secondary content 35 embodied as an advertisement recording 71 to the receiving device 12.

At operation 122, the receiving device 12 may receive and render the advertisement recording 71 at normal speed to the output device 18 until the advertisement recording 71 ends at operation 124. At operation 126 the user requests the play mode by pressing the play button on the remote control 20 and the receiving device 12 communicates the request to the streaming server 28.

At operation 128, at the streaming server 28, the request module 36 receives the request and, at operation 130, the communication module 38 communicates the entertainment asset 44 to the receiving device 12.

At operation 132 the receiving device 12 receives and renders the entertainment asset 44 to the display device 26 and the sound device 24 at a normal speed for the advertisement asset 46.

### Other Examples - Offsets into Primary and Secondary Content

The user in the above example entered a fast-forward trick mode request toward the beginning of a discrete unit of primary content 32 (e.g., advertisement asset 46) and the communication module 38 responded by causing the rendering of a discrete unit of secondary content 35 (e.g., advertisement recording 71) from some offset from the beginning of the discrete unit of secondary content 35 (e.g., advertisement recording 71). It will be appreciated by one skilled in the art that other examples may include the user entering a fast-forward trick mode request towards the end of the primary content 32. In response to receiving the request, the communication module 38 may advance to a corresponding offset from the beginning of the secondary content 35 (e.g., associated advertisement recording 71) and commence the rendering of the secondary content 35 (e.g., advertisement recording 71) from the identified offset. In general, the author of the secondary content 35 may exercise complete editorial control over selection of the offset into the secondary content 35 from which rendering is to begin based on the offset into the primary content 32 that may detected responsive to the trick mode request. It will further be appreciated that the author of a secondary application 76 may exercise the same editorial control.

### Other Examples - Fast-Forwarding Past the End of Secondary Content

A user that continues to fast-forward after the secondary content 35 (e.g., advertisement) has ended may, in one embodiment, view primary content 32 that may be rendered at an accelerated speed.

### Example Embodiments -Secondary Content

In response to the trick mode request, the communication module 38, in the above described example embodiment, communicated advertisement recording 71. It will be appreciated by one skilled in the art that other example embodiments may use different secondary content 35. For example, other types of secondary content 35 may include an advertisement slide show 73. Further, other embodiments may include an advertisement application 75 that may be used by the communication module 38 to generate an advertisement slide show 73 or an advertisement recording 71.

### Other Examples - Medium and Presentation of Primary and Secondary Content

Other examples may include primary content 32 and secondary content 35 that may be embodied in one or more mediums (e.g., visual, audio, kinetic, etc.), the visual medium presented as motion or still. It will be appreciated by one skilled in the art that the medium and presentation of primary content 32 does not necessarily determine the medium and presentation of secondary content 35 and that any combination of the medium and presentation of the primary content 32 may be associated to secondary content 35 in any combination of medium and presentation. For example, primary content 32 embodied solely in audio may be associated with secondary content 35 embodied as audio and visual (e.g., motion or still).

### Other Examples - Entertainment Assets

It will be appreciated by one skilled in the art that primary content 32 may also be embodied in the form of entertainment assets 44. Accordingly, the communication module 38 may select secondary content 35 based on the primary metadata 33 associated with an entertainment asset 44 rather than an advertisement asset 46.

### Other Examples - Location of Storage of Content and/or Metadata

Further, it will be appreciated by one skilled in the art that the primary information 31 and/or secondary information 34 may be stored on the database 22 before being played out on the receiving device 12. For example, the primary information 31 and/or secondary information 34 may be stored on the database 22 and the receiving device 12 may retrieve the primary content 32 and/or the primary metadata 33 and/or the secondary content 35 and/or secondary metadata 41 from the database 22 in response to a user request. Indeed, any combination of primary content 32, primary metadata 33, secondary content 35 or secondary metadata 41 that is utilized on the receiving device 12 may be obtained from any of the above described sources including the database 30, the live feed 29 or the database 22.

### Other Embodiments - Selection at Receiving Device

In another embodiment, the request module 36 and the communication module 38 may execute at the receiving device to select the secondary asset 48.

**Figure 6** is a flowchart illustrating a method 134, according to an example embodiment, to select secondary content 35. At decision operation 136, the communication module 38 determines whether the advertisement asset 46 uses a secondary content identifier 62 to identify a secondary asset 48. If the advertisement asset 46 uses a secondary content identifier 62 then a branch is made to decision operation 138. Otherwise a branch is made to decision operation 140.

At decision operation 138, the communication module 38 determines whether the secondary information 34 includes a secondary asset 48 with a matching secondary asset identifier 68. For example, the communication module 38 may compare the secondary asset identifier 68 for each of the secondary assets 48 with the secondary content identifier 62. If a matching secondary asset identifier 68 is found then a branch is made to operation 149. Otherwise a branch is made to decision operation 140.

At decision operation 140, the communication module 38 determines whether the advertisement asset 46 uses a product identifier 64 to identify a secondary asset 48. If the advertisement asset 46 uses a product identifier 64 then a branch is made to decision operation 142. Otherwise a branch is made to decision operation 144.

At decision operation 142, the communication module 38 determines whether the secondary information 34 includes a product identifier 64 that matches the product identifier 64 associated with the advertisement asset 46. For example, the communication module 38 may compare the product identifier 64 for each of the secondary assets 48 with the product identifier 64 for the advertisement asset 46. If a matching product identifier 64 is found then a branch is made to operation 149. Otherwise a branch is made to decision operation 144.

At decision operation 144, the communication module 38 determines whether the advertisement asset 46 uses a product domain 66 to identify a secondary asset 48. If the advertisement asset 46 uses a product domain 66 then a branch is made to decision operation 146. Otherwise a branch is made to operation 148.

At decision operation 146, the communication module 38 determines whether the secondary information 34 includes a product domain 66 that does not match the product domain 66 associated with the advertisement asset 46. For example, the communication module 38 may compare the product domain 66 for each of the secondary assets 48 with the product domain 66 for the advertisement asset 46. If a non-matching product domain 66 is found then a branch is made to operation 149. Otherwise a branch is made to operation 148.

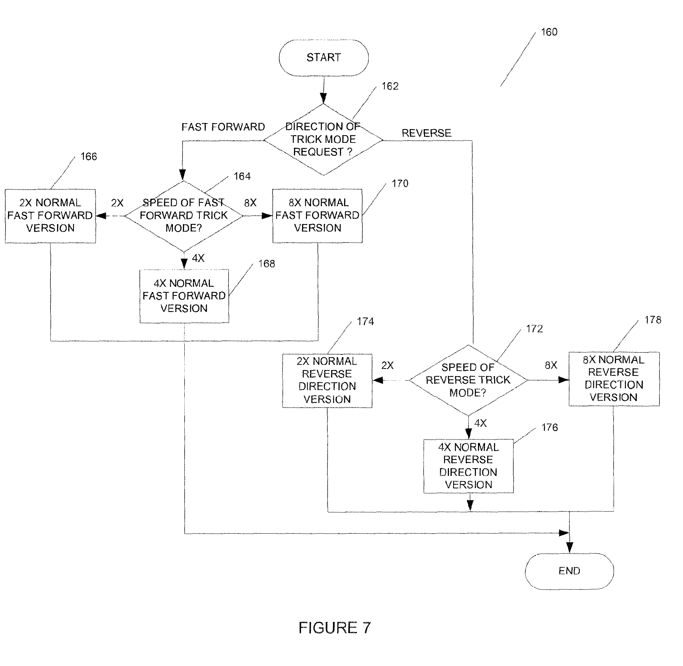

At operation 148, the communication module 38 selects a secondary asset 48 for play out. At operation 149, the communication module 38 selects a version of the secondary asset 48 based on the type of trick mode request. Further details of the processing for the operation 149 is described in **Figure 7****.**

The method 64 may be embodied using another sequence of tests. For example, one embodiment may use the following order of testing: product domain 66, product identifier 64, followed by secondary content identifier 62.

At decision operation 150, the communication module 38 determines whether the secondary asset 48 includes secondary content 35 in the form of secondary application 76. If the communication module 38 determines the secondary asset 48 is in the form of a secondary application 76 then a branch is made to operation 152. Otherwise a branch is made to operation 154.

At operation 152, the communication module 38 uses the secondary application 76 to generate an advertisement recording 71. In other embodiments, the communication module 38 may generate an advertisement slide show 73.

At operation 154, the communication module 38 positions the secondary content 35 to be played out and the process ends. For example, the communication module 38 may position the secondary content 35 based on the offset 67 in the trigger information 60 associated with the primary content 32.

**Figure 7** is a flowchart illustrating a method 160, according to an example embodiment, to select a version of a secondary asset 48 based on the type of trick mode request. The method 160 commences at decision operation 162 with the communication module 38 determining the direction of the trick mode request. If the communication module 38 determines that the trick mode request is a fast-forward request then a branch is made to decision operation 164. Otherwise, the communication module 38 determines the trick mode request is a rewind or reverse request and branches to decision operation 172.

At decision operation 164, the communication module 38 determines the speed of the trick mode request. If the communication module 38 determines the trick mode request is two-times normal speed then a branch is made to operation 166. If the communication module 38 determines the trick mode request is four-times normal speed then a branch is made to operation 168. If the communication module 38 determines speed of the trick mode request is eight-times the normal speed then a branch is made to operation 170. At operations 166, 168, and 170 the communication module 38 identifies two-times, four-times and eight-times normal fast-forward versions respectively.

At decision operation 172 the communication module 38 determines the speed of the rewind or reverse trick mode request. If the speed of the rewind trick mode request is two-times, four-times, or six-times the normal speed then a branch is made to operation 174, 176, and 178 respectively.

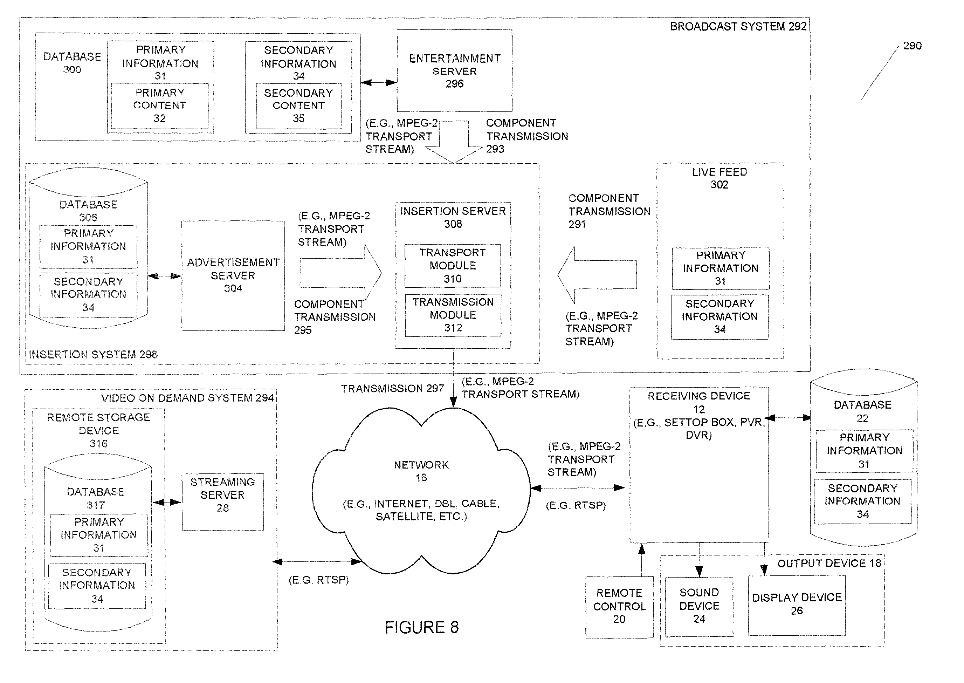

**Figure 8** is a block diagram illustrating a system 290, according to an example embodiment. The system 290 may be used to communicate a transmission that facilitates modification of playback of primary content 32 at a receiving device 12.

The system 290 includes a receiving device 12, a broadcast system 292 and a video-on-demand system 294. The broadcast system 292 includes an entertainment server 296, an insertion system 298, that includes an advertisement server 304 and an insertion server 308, and a live feed 302.

Broadly speaking, the insertion server 308 may receive a component transmission 291 (e.g., Internet Protocol (IP)) that includes a stream that is formatted in MPEG-2 compression format from a live feed 302, a component transmission 293 that uses an MPEG-2 compression format from the entertainment server 296, and a component transmission 295 that uses an MPEG-2 compression format from the advertisement server 304.

The component transmissions 291, 293, and 295 may include primary information 31 and/or secondary information 34 that is live (e.g., sporting events, election results, etc.) or prerecorded. Accordingly, the primary information 31 may include entertainment assets 44 (e.g. live and/or prerecorded content) and/or advertisement assets 46 (e.g. live content and/or prerecorded content). Likewise, the secondary information 34 may include secondary assets (e.g. live content and/or prerecorded content).

Each of the component transmissions 291, 293, 295 may include multiple channels. Each channel may include multiple packetized elementary streams that carry audio and/or visual and/or metadata. Other example embodiments may include component transmissions 291, 293, 295 embodied in other transport formats (e.g., IP) and compression formats (e.g., MPEG-4, VC1, etc.).

The insertion server 308 may use the component transmissions 291, 293, 295 to generate a transmission 297 that is communicated over the network 16 to the receiving device 12. Other example embodiments may include the transmission 297 embodied in other compression formats (e.g., MPEG-4, VC1) or other transport formats (e.g., Internet Protocol (IP)).

The entertainment server 296 is coupled to a database 300 that may include primary information 31 and secondary information 34, as previously described.

The advertisement server 304 is shown to be coupled to a database 306 that may store primary information 31 and/or secondary information 34 as previously described.

The insertion server 308 is shown to include a transport module 310 and a transmission module 312. The transport module 310 may receive the component transmission 291 from the live feed 302 and the component transmission 293 from the entertainment server 296 and the component transmission 295 from the advertisement server 304. Further, the transport module 310 may generate the transmission 297 based on the component transmission 291 from the live feed 302 and the component transmission 293 received from the entertainment server 296 and the component transmission 295 received from the advertisement server 304. The transmission module 312 may communicate the transmission 297 to the receiving device 12.

The video-on-demand system 294 includes the streaming server 28 that is shown to be coupled to a remote storage device 316 that may include a database 317 that may store primary information 31 and/or secondary information 34. The receiving device 12 may use the secondary information 34 received in the transmission 297 to request additional secondary information 34 that is stored on the remote storage device 316 or the database 22.

While the system 290 shown in **Figure 8** employs a client-server architecture between the receiving device 12 and the video-on-demand server 28, the present disclosure is of course not limited to such an architecture and could equally well find application in a distributed, or peer-to-peer, architecture system.

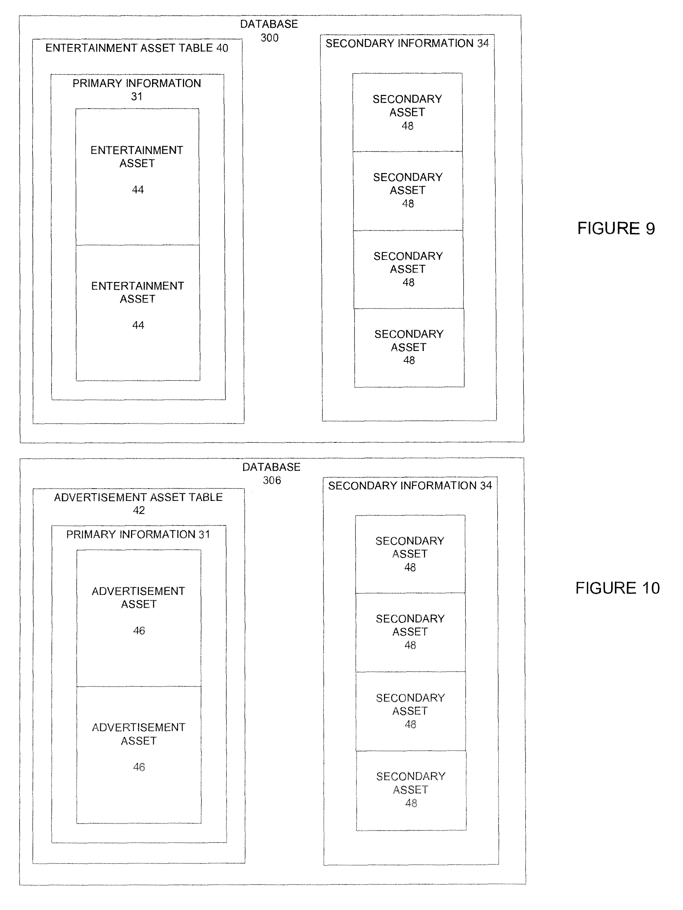

**Figure 9** is a block diagram illustrating a database 300, according to an example embodiment. The database 300 is coupled to the entertainment server 296 and is shown to include the entertainment asset table 40 and secondary information 34, as previously described.

**Figure 10** is a block diagram illustrating a database 306, according to an example embodiment. The database 306 is coupled to the advertisement server 304 and is shown to include the advertisement asset table 42 and secondary information 34, as previously described.

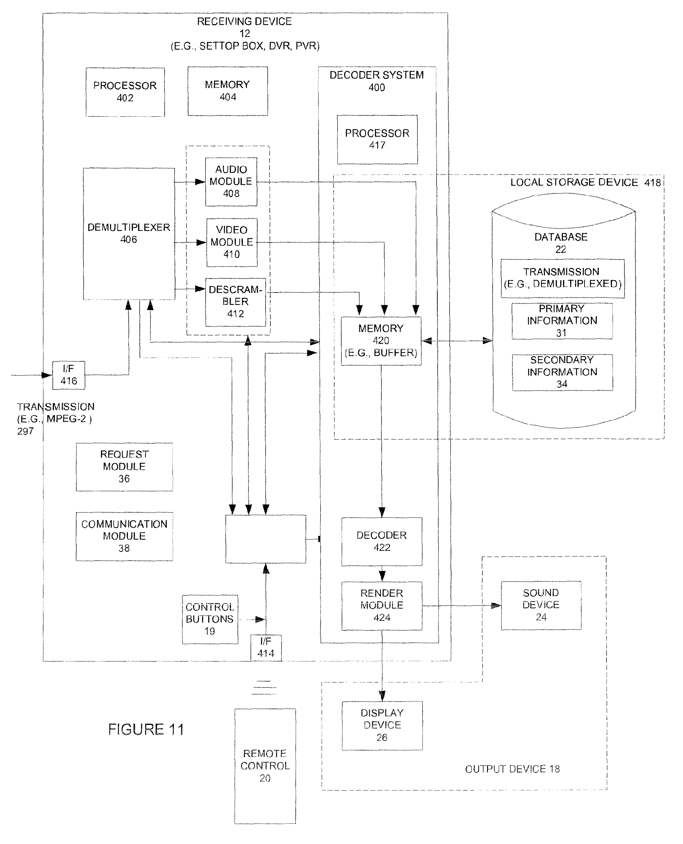

**Figure 11** is a block diagram illustrating a receiving device 12, according to an example embodiment. The receiving device 12 has previously been described; however, further description is provided below for previously unmentioned components. The receiving device 12 may include a decoder system 400 including a processor 417, a processor 402, a memory 404, a demultiplexer 406, an audio module 408, a video module 410, a descrambler 412, control buttons 19, an interface 414, and an interface 416, a local storage device 418, a request module 36, and a communication module 38.

The processors 402, 417 may execute instructions and move data to and from the memory 404 and the memory 420. The processors 402, 417 may also control any of the components and communicate with any of the components on the receiving device 12, for example, including the decoder system 400, the demultiplexer 406, the audio module 408, the video module 410, the descrambler 412, the control buttons 19, the interface 414, and the interface 416. The processors 402, 417 may further be used to execute the request module 36, the communication module 38, and other modules. The request module 36 and the communication module 38 operate as previously described.

The receiving device 12 may receive primary information 31 and secondary information 34 from the network 204 via the interface 416 which, in turn, is received by the demultiplexer 406. In addition, the receiving device 12 may receive requests from the control buttons 19 or the remote control 20. For example, the receiving device 12 may receive a request to fast-forward or reverse (e.g., rewind) primary content at an accelerated speed that may be 2X, 4X, or 6X normal speed.

The demultiplexer 406 may demultiplex the primary information 31 and the secondary information 34 into audio, video, metadata streams (e.g., primary metadata 33, secondary metadata 41, etc.) that may be respectively communicated to the audio module 408, the video module 410, and the descrambler 412. The metadata streams may further include descrambling information that includes conditional access decryption keys that may be used by the descrambler 412 to descramble or decrypt the audio and video streams. Other embodiments may not include the descrambler 412. The audio module 408 may process the audio and communicate the audio to the decoder system 400. Similarly, the video module 410 may process the video and communicate the video to the decoder system 400. Finally, the descrambler 412 may process the metadata and communicate metadata to the decoder system 400.

The decoder system 400 is shown to include the processor 417, the memory 420, a decoder 422, and a render module 424. The processor 417 has been described. The decoder 422 may decode the packets/frames into image and sound data. The render module 424 may render the sound data to the sound device 24 and render image data to the display device 26.

The local storage device 418 may include a circular buffer that includes both the memory 420 and the database 22. The circular buffer may be used by the receiving device 12 to store the primary information 31 and/or the secondary information 34. For example, a user may be watching a movie and select a pause button on the remote control 20 to answer a telephone call. Responsive to selection of the pause button, the movie may be stored in the circular buffer. Subsequent to completing the telephone call the user may select the play button on the remote control 20 to prompt the receiving device 12 to resume rendering of the movie to the output device 18 by retrieving the movie from the circular buffer. In addition, the local storage device 418 may include a file structure for storing and retrieving the primary information 31 and/or the secondary information 34 for extended periods of time (e.g., weeks, years, etc.).

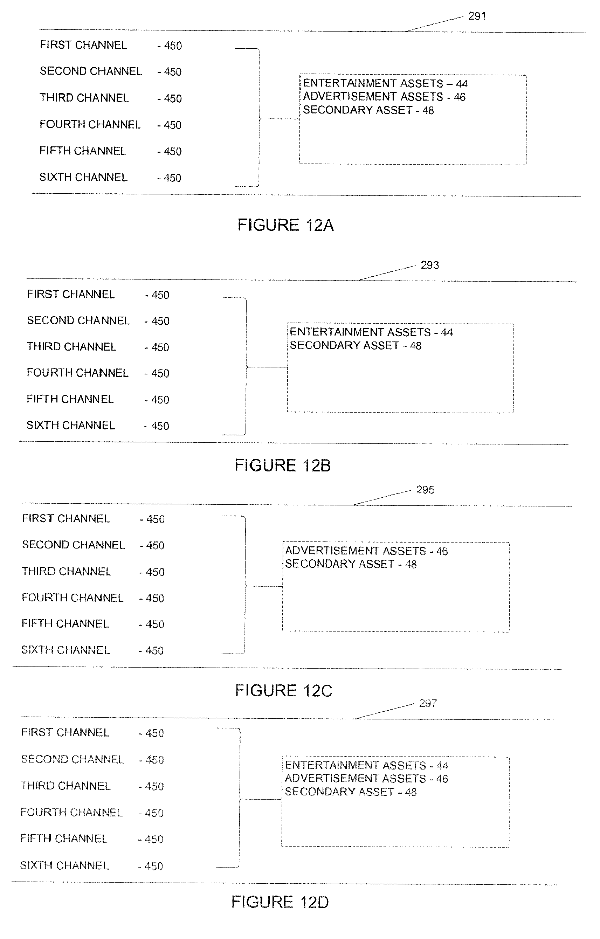

**Figure 12A** is a block diagram illustrating a component transmission 291, according to an example embodiment. The component transmission 291 may be communicated by the live feed 302 and received by the insertion server 308. The component transmission 291 may include multiple channels 450 that may carry primary information 31, in the form of entertainment assets 44 and advertisement assets 46, and secondary information 34 in the form of secondary assets 48.

**Figure 12B** is a block diagram illustrating a component transmission 293, according to an example embodiment. The component transmission 293 may be communicated by the entertainment server 296 and received by the insertion server 308. The component transmission 293 may include multiple channels 450 that may carry primary information 31 in the form of entertainment assets 44 and secondary information 34 in the form of secondary assets 48.

**Figure 12C** is a block diagram illustrating a component transmission 295, according to an example embodiment. The component transmission 295 may be communicated by the advertisement server 304 and received by the insertion server 308. The component transmission 295 may include multiple channels 450 that may carry primary information 31 in the form of advertisement assets 46 and secondary information 34 in the form of secondary assets 48.

**Figure 12D** is a block diagram illustrating a transmission 297, according to an example embodiment. The transmission 297 may be communicated by the insertion server 308 and received by the receiving device 12. The transmission 297 may be generated based on component transmission 291 received from the live feed 302, the component transmission 293 received from the entertainment server 296 and the component transmission 295 received from the advertisement server 304. The transmission 297 may include multiple channels 450 that may be selected by the user via the remote control 20 or the control buttons 19. The transmission 297 may carry primary information 31, in the form of entertainment assets 44 and advertisement assets 46, and secondary information 34 in the form of secondary assets 48

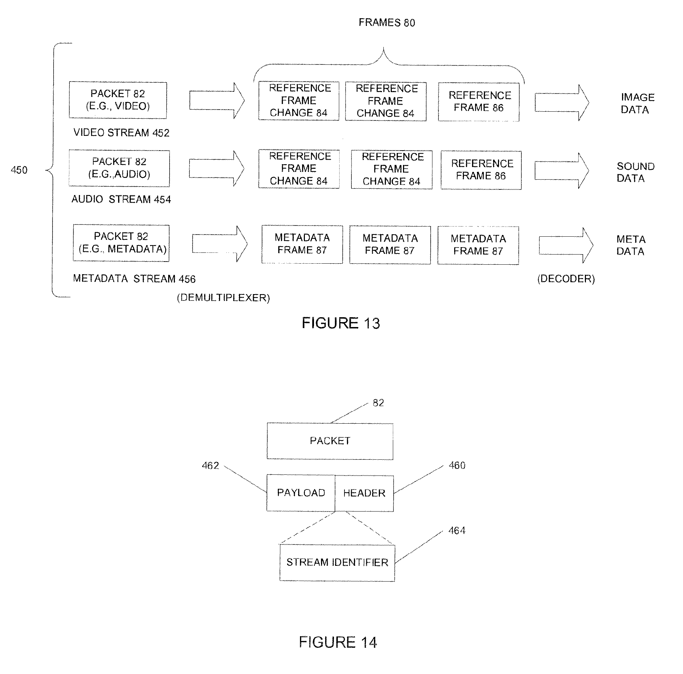

**Figure 13** is a block diagram illustrating multiple streams associated with a single channel 450, according to an example embodiment. The streams may include a video stream 452, an audio stream 454, and a metadata stream 456. Each stream may be embodied as packets 82 that may be received at the demultiplexer 406 as they enter the receiving device 12. The demultiplexer 406 may concatenate the payload of the packets to generate frames 80. The frames 80 are shown to include reference frames 86 and reference frame changes 84 as previously described. The reference frames 86, the reference frame changes 84, and the metadata frames 87 may be descrambled and communicated to the decoder 422. The decoder 422 may decode the frames 80 into image data and sound data and communicate the image data and sound data to the render module 424 that renders the image and sound data to the output device 18 including the display device 26 and the sound device 24.

**Figure 14** is a block diagram illustrating the packet 82, according to an example embodiment. The packet 82 is shown to include a header 460 and a payload 462. The header 460 may include a stream identifier 464 that may be used to identify packets 82 of a single stream. For example, a first stream identifier 464 may identify a first stream carrying packets 82 with a video payload, a second stream identifier 464 may identify a second stream that may include packets 82 carrying an audio payload, and a third stream identifier 464 may identify a third stream 327 that includes packets 82 carrying a metadata payload. The payload 462 may include frame information to construct the frames 80.

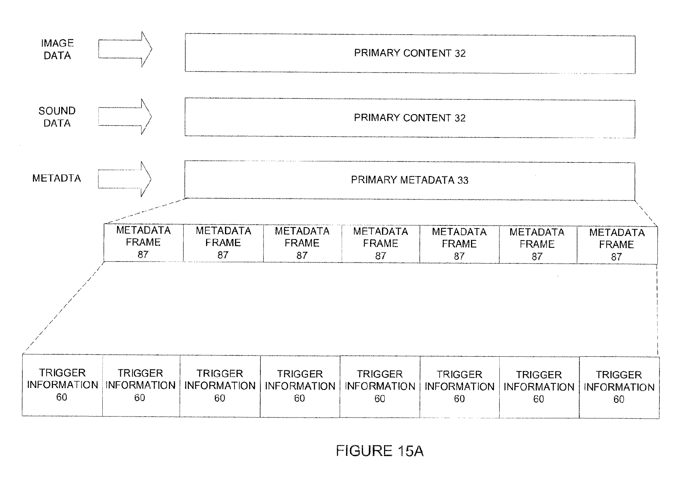

**Figure 15A** is a block diagram illustrating primary content 32 and primary metadata 33, according to an example embodiment. The primary content 32 is shown to be synchronized with the primary metadata 33. The primary metadata 33 is further shown to include multiple metadata frames 87 that include trigger information 60. In one embodiment, a single frame 87 may contain a single trigger information entry 60. In another embodiment, a single frame 87 may contain multiple trigger information entries 60. In yet another embodiment, any single metadata frame 87 may or may not contain trigger information 60.

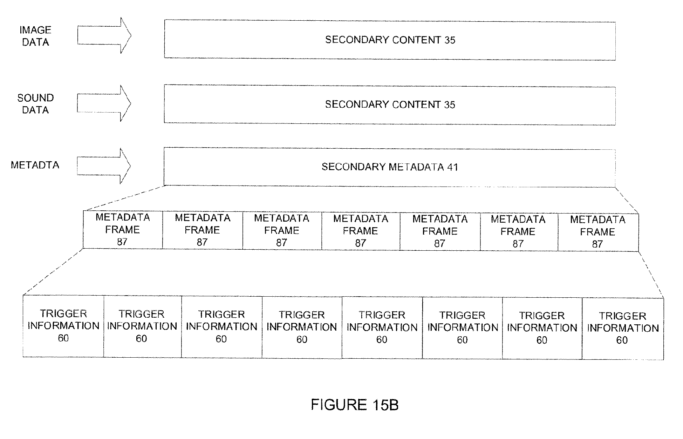

**Figure 15B** is a block diagram illustrating secondary content 35 and secondary metadata 41, according to an example embodiment. The secondary content 35 is shown to be synchronized with the secondary metadata 41. The secondary metadata 41 is further shown to include multiple metadata frames 87 that include trigger information 60. In one embodiment, a single frame 87 may contain a single trigger information entry 60. In another embodiment, a single frame 87 may contain multiple trigger information entries 60. In yet another embodiment, any single metadata frame 87 may or may not contain trigger information 60.

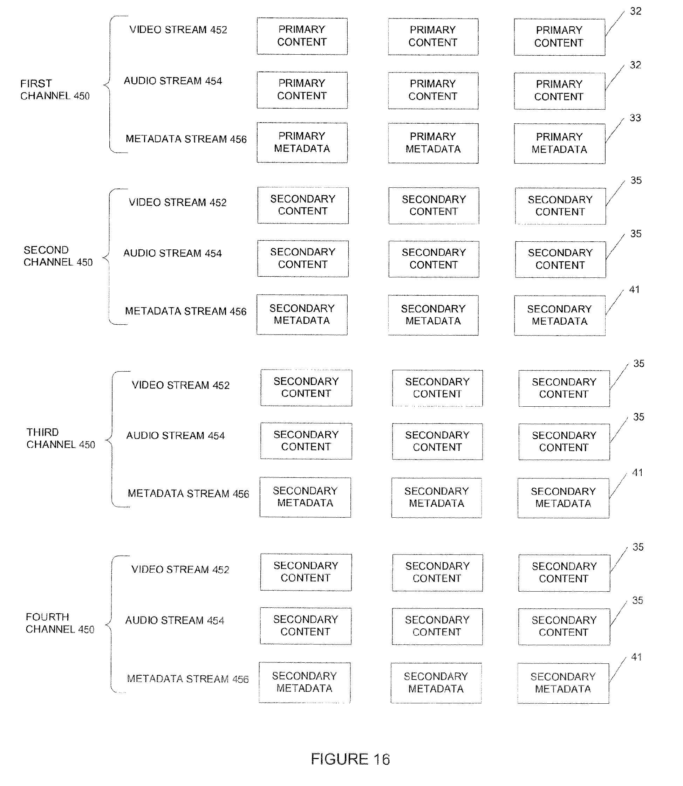

**Figure 16** is a block diagram illustrating a transmission 297, according to an example embodiment. The transmission 297 is shown to simultaneously carry four channels (e.g., first, second, etc.) that respectively carry a video stream 452, an audio stream 454, and a metadata stream 456. The first channel carries primary content 32 and primary metadata 33. The second, third, and fourth channels carry secondary content 35 and secondary metadata 41. The metadata stream 456 associated with the first channel 450 and the metadata stream 456 associated with the second, third, and fourth channels 450 may be used to select play out of the secondary content 35 carried in the second, third, or fourth channel responsive to receipt of a trick mode request. Other embodiments of the transmission 297 may carry additional or fewer channels 450, additional channels 450 carrying primary content 32 and primary metadata 33, and additional or fewer channels 450 carrying secondary content 35 and secondary metadata 41.

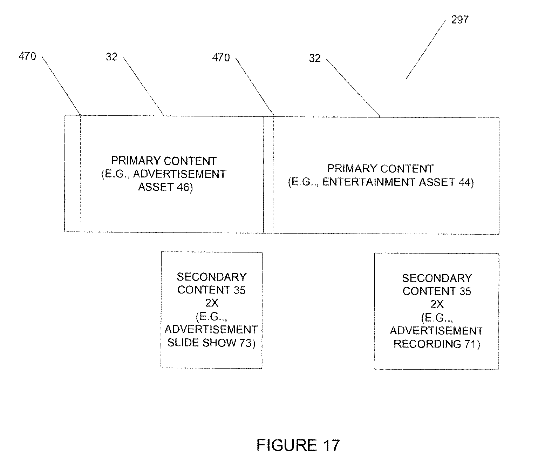

**Figure 17** is a block diagram illustrating a transmission 297 including primary content 32 that includes end of primary content markers 470, according to an example embodiment. The transmission 297 is shown to include primary content 32 in the form of an entertainment asset 44 and an advertisement asset 46. The end of primary content markers 470 may be used by the communication module 38 to identify a location in the primary content 32 to resume play. For example, responsive to receipt of a play request while rendering an advertisement recording 71 to the output device 18, the communication module 38 may skip to the end of primary content marker 361 to resume play of the entertainment asset 44. Similarly, for example, responsive to receipt of a play request while rendering an advertisement slide show 73 to the output device 18, the communication module 38 may skip to the end of primary content marker 361 to resume play of the advertisement asset 46.

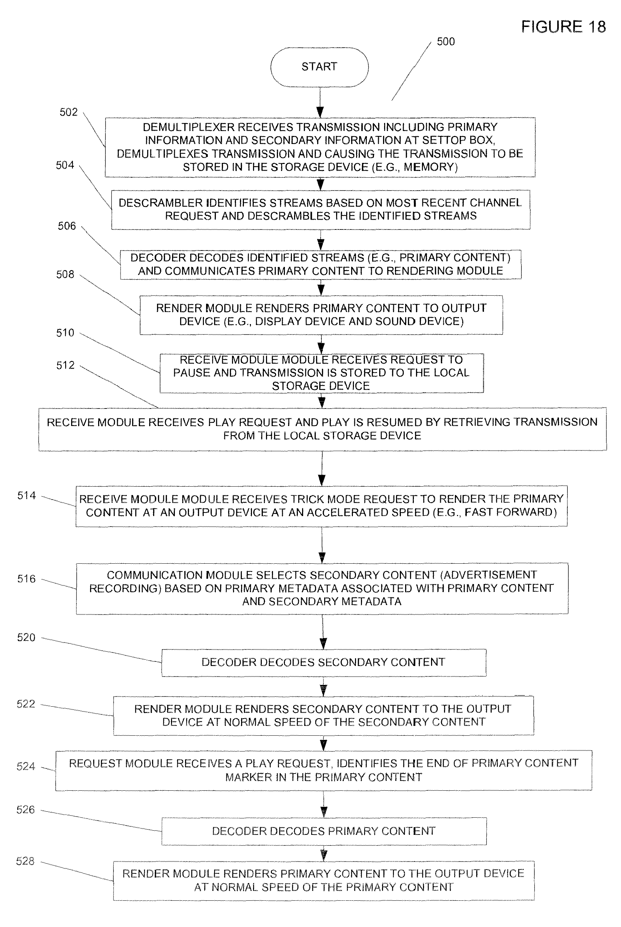

**Figure 18** is flowchart illustrating the method 500, according to an example embodiment, to play out advertisements at a receiving device 12. The method 500 commences at operation 502 with the demultiplexer 406 receiving the transmission 297 via the interface 416. The transmission 297 may include primary information 31 and secondary information 34 as described. The demultiplexer 406 may demultiplex the transmission 297 according to channels 450 and store the demultiplexed transmission 297 as packets 82 in the local storage device 418. For example, the demultiplexer 406 may use the audio module 408, the video module 410, and the descrambler 412 to store the demultiplexed transmission 297. Other example embodiments may include a demultiplexer 406 that further depacketizes the transmission 297 and concatenates the payloads 342 to generate frames 86 that may be stored in the local storage device 418.

At operation 504, the descrambler 412 may identify the streams 452, 454, 456 (video, audio, metadata) in the transmission 297 associated with the most recent channel request received at the receiving device 12 and descramble the identified streams 452, 454, 456 based on descrambling information in the metadata stream 456. For example, the user may have requested a channel 450 that carries ESPN (e.g., the ESPN channel). Further, the decoder system 400, may communicate the descrambled streams 452, 454, 456 to the decoder 422.

At operation 506, the decoder 422 decodes the primary content 32 in the identified streams 452, 454, 456 and communicates the primary content 32 to the render module 424.

At operation 508, the render module 424 renders the primary content 32 to the output device 18 that may include the display device 26 and the sound device 24. For example, the render module 424 may render an entertainment asset 44 (e.g., 2006 World Cup Soccer Game) to the output device 18.

At operation 510, the request module 36 may receive a pause request via the control buttons 19 to pause the rendering of the 2006 World Cup Soccer Game to the output device 18. In response to receiving the pause request, the request module 36 communicates the request to the descrambler 412, which stops descrambling packets 82, and to the decoder system 400, which stops retrieving the streams from the storage device 418. Accordingly, the demultiplexer 406 continues to store the transmission 297 to the memory 420 with possible overflow to the database 22.

At operation 512, the request module 36 receives a play request entered from the control buttons 19. In response to receiving the play request, the request module 36 resumes play by causing the transmission 297 to stop being recorded to the local storage device 309, the descrambler 412 to start descrambling packets 82, and the decoder system 400 to start retrieving the descrambled streams from the storage device 418.

At operation 514, the request module 36 receives a trick mode request via the remote control 20. The trick mode request may be to render the primary content 32 at the output device 18 at an accelerated speed. For example, the request module 36 may receive a request to fast-forward the primary content 32 at six-times the normal speed (e.g., 6X FF VERSION).

At operation 516, the communication module 38 selects secondary content 35 based on the primary metadata 33 associated with the primary content 32 and the secondary information 34. For example, the communication module 38 may identify trigger information 60 associated with the primary content 32 according to an offset 67 that corresponds to the segment of primary content 32 that is being played out at the moment of receipt of the trick mode request. Next, the communication module 38 may use the trigger information 60 to search the secondary metadata 41 of the secondary assets 50 to select a specific secondary asset 50 (e.g., secondary content 35) .

In addition, the communication module 38 may initiate fast forwarding of the advertisement asset 46 at six-times the normal speed without streaming the advertisement asset 46 to the receiving device 12.

In the present embodiment, the communication module 38 may retrieve the primary metadata 33 and the secondary metadata 41 from the transmission 297. For example, the communication module 38 may retrieve the primary metadata 33 from the metadata stream 456 associated with the channel 450 that carries ESPN (e.g., primary content 32). Further for example, the communication module 38 may retrieve secondary metadata 41 from the metadata streams 456 of the channels 450 that carry secondary information 34. In the present embodiment, the communication module 38 may generate secondary content 35 in the form of an advertisement recording 71 that has been generated from an advertisement application 75. Further details of the processing for the operation 516 is described in **Figure 6****.**

At operation 520, the decoder 422 decodes the advertisement recording 71 and communicates the decoded advertisement recording 71 to the render module 424.

At operation 522, the render module 424 may render the advertisement recording 71 to the output device 18 including the display device 26 and the sound device 24 at a normal speed of the advertisement recording 71. For example, the advertisement recording 71 may display an image of a rotating Pepsi logo. (e.g., a sponsor of the 2006 World Cup Soccer Game).

At operation 524, the request module 36 may receive a play request from the control buttons 19. The request module 36, in turn, may cause the descrambler 228 to descramble the associated streams 327, 329, 331 of primary content 32 for the ESPN channel 450. Next, the request module 322 may identify the end of primary content marker 361 in the primary content 32 (e.g., 2006 World Cup Soccer Game) and cause the decoder system 400 to commence communication of the video, audio, and metadata streams 327, 329, 331 based on end-of-primary content marker 361.

At operation 526, the decoder 422 decodes the primary content 32 (e.g., 2006 World Cup Soccer Game).

At operation 528, the render module 424 renders the primary content 21 in the form of the entertainment asset 44 (e.g., 2006 World Cup Soccer Game) to the output device 18.

### Other Example Embodiments - Location of Secondary Information

Other embodiments may include secondary information 34 that is carried in the audio streams 329 and video stream 452 of the channel 450 that is currently being rendered to the output device 18 (e.g., ESPN channel) or the metadata stream 456 of the channel 450 that is currently being rendered to the output device 18.

### Other Examples - Location of Storage of Content and/or Metadata

Further, it will be appreciated by one skilled in the art that the primary information 31 and/or secondary information 34 may be stored on the database 22 before being selected for play out on the receiving device 12. For example, the primary information 31 and/or secondary information 34 may be stored on the database 22 and the receiving device 12 may retrieve the primary content 32 and/or the primary metadata 33 and/or the secondary content 35 and/or secondary metadata 41 from the database 22 in response to a user request. Indeed, any combination of primary content 32, primary metadata 33, secondary content 35 or secondary metadata 41 that is utilized on the receiving device 12 may be obtained from any of the transmission 297, the remote storage device 316 or the database 22. For example, in one embodiment, secondary information 34 that is played out in response to a trick mode request may have been stored on the local storage device 418 device three days before receipt of the above described entertainment asset 44 on the transmission 297 (e.g., 2006 World Cup Soccer Game).

### Other Examples - Medium and Presentation of Primary and Secondary Content

Other example may include primary content 32 and secondary content 35 that may be embodied in one or more mediums (e.g., visual, audio, kinetic, etc.), the visual medium presented as motion or still. It will be appreciated by one skilled in the art that the medium and presentation of primary content 32 does not necessarily determine the medium and presentation of secondary content 35 and that any combination of the medium and presentation of the primary content 32 may be associated to secondary content in any combination of medium and presentation. For example, primary content 32 embodied solely in audio may be associated with secondary content 35 embodied as audio and visual (e.g., motion or still).

### Other Examples - Fast Forwarding Past the End of Secondary Content

A user that continues to fast-forward after the secondary content 35 (e.g., advertisement) has ended may, in one embodiment, view corresponding primary content 32 that may be rendered at an accelerated speed.

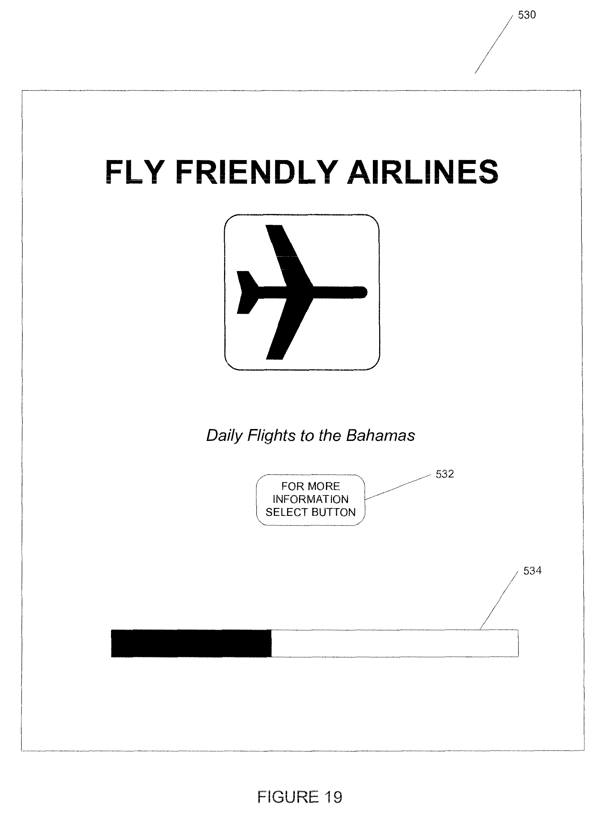

**Figure 19** is a diagrammatic illustration of a user interface 530, according to an example embodiment. The user interface 530 is displayed on a display device 26 and includes an image that was rendered from an advertisement recording 71. The image is shown to include a user interface element 532 and a progress bar 534. The user interface element 532 may be selected to invoke an interactive application that requests information from the user. The progress bar 534 may provide a visual indication to the user of the amount of time remaining to fast-forward to the end of the advertisement asset 46.

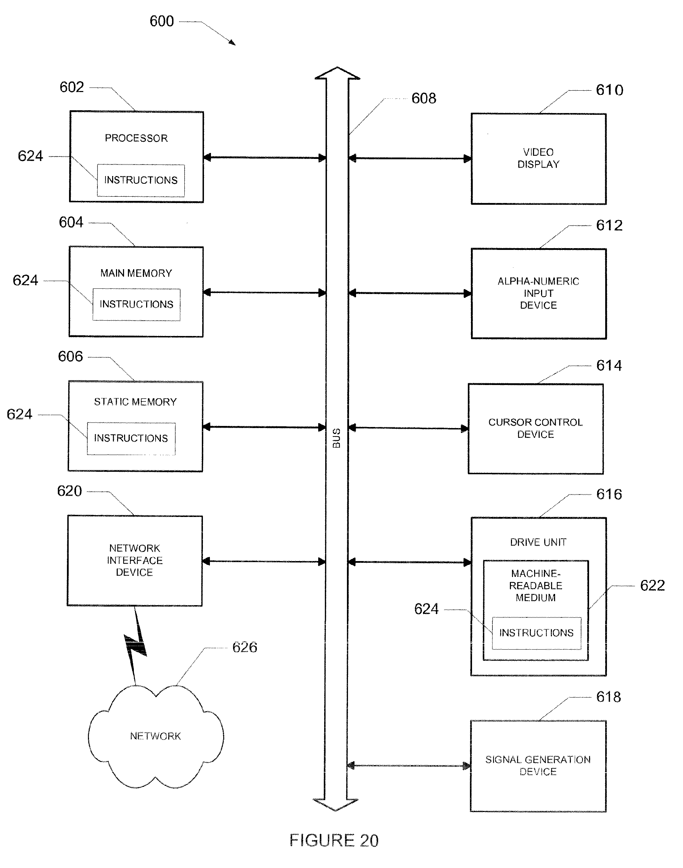

**Figure 20** shows a diagrammatic representation of a machine in the example form of a computer system 600 within which a set of instructions for causing the machine to perform any one or more of the methodologies discussed herein, may be executed. In alternative example embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a server computer, a client computer, a personal computer (PC), a tablet PC, a set-top box (STB), a Personal PrimaryAssistant (PDA), a cellular telephone, a Web appliance, a network router, switch, or bridge, an iPod, a personal video recorder (PVR) (e.g., analog or digital input), a personal digital recorder (PDR) (e.g., analog or digital input), a mobile phone, a portable media player, a game console, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU) a graphics processing unit (GPU) or both), a main memory 604 and a static memory 606, which communicate with each other via a bus 608. The computer system 600 may further include a video display unit 610 (e.g., a liquid crystal display (LCD) or a cathode ray tube (CRT)). The computer system 600 also includes an alphanumeric input device 612 (e.g., a keyboard), a cursor control device 614 (e.g., a mouse), a disk drive unit 616, a signal generation device 618 (e.g., a speaker) and a network interface device 620.

The disk drive unit 616 includes a machine-readable medium 622 on which is stored one or more sets of instructions (e.g., software 624) embodying any one or more of the methodologies or functions described herein. The software 624 may also reside, completely or at least partially, within the main memory 604 and/or within the processor 602 during execution thereof by the computer system 600, the main memory 604 and the processor 602 also constituting machine-readable media.

The software 624 may further be transmitted or received over a network 626 via the network interface device 620.

While the machine-readable medium 622 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding, or carrying a set of instructions for execution by the machine and that cause the machine to perform any one or more of the methodologies of the present disclosure. The term "machine-readable medium" shall accordingly be taken to include, but not be limited to, solid-state memories, optical and magnetic media, and carrier wave signal.

Thus, systems and methods to modify playback or playback have been described. Although the present disclosure has been described with reference to specific example embodiments, it will be evident that various modifications and changes may be made to these example embodiments without departing from the broader spirit and scope of the disclosure. Accordingly, the specification and drawings are to be regarded in an illustrative rather than a restrictive sense.

## Claims

1. A system including:
a request module to receive a request for primary content; and
a communication module to communicate primary content to a receiving device,
the request module to receive a request to communicate the primary content for render to an output device at the receiving device at an accelerated speed of the primary content,
the communication module to select secondary content from a plurality of secondary content based on primary metadata associated with the primary content and secondary metadata associated with the secondary content, the communication module to communicate the secondary content to the receiving device responsive to receipt of the request, the secondary content for render to the output device at the receiving device instead of the primary content, the secondary content for render at a normal speed of the secondary content.

2. The system of claim 1, wherein the communication module is to select the secondary content from a plurality of secondary content based on a first product domain associated with a product that is presented by the primary content.

3. The system of claim 2, wherein the communication module is to select the secondary content based on a second product domain that is different from the first product domain.

4. The system of claim 1, wherein the communication module is to select the secondary content from the plurality of secondary content based on a product that is presented by the primary content.

5. The system of claim 4, wherein the secondary content presents the same product that is presented by the primary content.

6. The system of claim 1 wherein the communication module generates the secondary content from a secondary application to enable the selection of the secondary content.

7. A system including:
a demultiplexer to receive a transmission at a receiving device, the transmission including primary content and primary metadata associated with the primary content, the transmission being stored on a local storage device;
a render module to render the primary content to an output device at the receiving device at a normal speed for the primary content;
a request module to receive a request to render the primary content to an output device at the receiving device at an accelerated speed of the primary content; and
a communication module to select secondary content from a plurality of secondary content based on secondary metadata associated with the secondary content and the primary metadata, the render module to render the secondary content instead of the primary content to the output device at the receiving device, the render module to render the secondary content at a normal speed of the secondary content responsive to receipt of the request.

8. The system of claim 7, wherein the communication module is to select the secondary content from the plurality of secondary content based on a first product domain that is associated with a product that is presented by the primary content.

9. The system of claim 8, wherein the communication module is to select the secondary content based on a second product domain associated with secondary content that is different from the first product domain, the secondary content to present a second product in the second product domain.

10. The system of claim 7, wherein the communication module is to select the secondary content from a plurality of secondary content based on a secondary content identifier that is included in the primary metadata.

11. The system of claim 7, wherein the communication module is to select the secondary content from a plurality of secondary content based on a product identifier that is included in the primary metadata, wherein the render of the secondary content presents a product that is identified by the product identifier.

12. The system of claim 7, wherein the communication module generates the secondary content from a secondary application to enable the selection of the secondary content.

13. A method including:
receiving a request for primary content;
communicating primary content to a receiving device;
receiving a request to communicate the primary content for rendering to an output device at the receiving device at an accelerated speed of the primary content;
selecting secondary content from a plurality of secondary content based on primary metadata associated with the primary content and secondary metadata associated with the secondary content; and
communicating the secondary content to the receiving device responsive to receipt of the request, the secondary content for rendering to the output device at the receiving device instead of the primary content, the secondary content for rendering at a normal speed of the secondary content.

14. The method of claim 13, wherein the selecting the secondary content from the plurality of secondary content includes selecting the secondary content based on a first product domain associated with a product that is presented by primary content.

15. The method of claim 14, wherein the selecting the secondary content from the plurality of secondary content includes selecting the secondary content based on a second product domain that is different from the first product domain.

16. The method of claim 13, wherein the selecting the secondary content from the plurality of secondary content includes selecting the secondary content based on a product that is presented by the primary content.

17. The method of claim 16, wherein the selecting the secondary content from the plurality of secondary content includes rendering secondary content to present the product that is presented by the primary content.

18. The method of claim 17, wherein the selecting the secondary content includes generating the secondary content from a secondary application.

19. A method including:
receiving a transmission at a receiving device, the transmission including primary content and primary metadata associated with the primary content storing the transmission on a local storage device;
rendering the primary content to an output device at the receiving device at a normal speed for the primary content;
receiving a request to render the primary content to an output device at the receiving device at an accelerated speed of the primary content; and
selecting secondary content from a plurality of secondary content based on secondary metadata associated with the secondary content and the primary metadata; and
rendering the secondary content, instead of the primary content, to the output device at the receiving device, the rendering of the secondary content is at a normal speed of the secondary content responsive to receipt of the request.

20. The method of claim 19, wherein the selecting the secondary content from the plurality of secondary content is based on a first product domain that is associated with a product that is presented by the primary content.

21. The method of claim 20, wherein the selecting the secondary content is based on a second product domain that is different from the first product domain, wherein the rendering the secondary content includes presenting a second product that is in the second product domain.

22. The method of claim 21, wherein the selecting the secondary content from a plurality of secondary content is based on a secondary content identifier that is included in the primary metadata.

23. The method of claim 19, wherein the selecting the secondary content from a plurality of secondary content is based on a product identifier that is included in the primary metadata, wherein the rendering the secondary content includes presenting a product that is identified by the product identifier.

24. The method of claim 19, wherein the selecting the secondary content includes generating the secondary content from a secondary application.

25. A machine-readable medium storing instructions that, when executed by a machine, cause the machine to:
receive a request for primary content;
communicate primary content to a receiving device;
receive a request to communicate the primary content for render to an output device at the receiving device at an accelerated speed of the primary content;
select secondary content from a plurality of secondary content based on primary metadata associated with the primary content and secondary metadata associated with the secondary content; and
communicate the secondary content to the receiving device responsive to receipt of the request, the secondary content for render to the output device at the receiving device instead of the primary content, the secondary content for render at a normal speed of the secondary content.

26. A system including:
a first means for receiving a request for primary content; and
a second means for communicating primary content to a receiving device,
the first means for receiving a request to communicate the primary content for render to an output device at the receiving device at an accelerated speed of the primary content,
the second means for selecting secondary content from a plurality of secondary content based on primary metadata associated with the primary content and secondary metadata associated with the secondary content, the second means for communicating the secondary content to the receiving device responsive to receipt of the request, the secondary content for render to the output device at the receiving device instead of the primary content, the secondary content for render at a normal speed of the secondary content.
